# EUROPEAN PATENT APPLICATION

(11) **EP 3 531 293 A1**
(43) Date of publication of application: **28.08.2019**
(21) Application number: 18275030.7
(22) Date of filing: 27.02.2018
(51) Int. Cl.: G06F 12/0813, G06F 12/0837, G06F 12/0842

(54) **COMPUTING SYSTEM OPERATING A REFLECTIVE MEMORY NETWORK**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A computing system (100) comprises a plurality of computing devices (102) configured to collectively operate a reflective memory network. Each of the computing devices is configured to execute a respective part (109) of an application set that processes a plurality of parameters. The reflective memory network is configured as a series of sets of contiguous addresses, each of the sets associated with a respective one of the plurality of computing devices and including a predefined number of the contiguous addresses useable only for storing the at least one parameter written by the part of the application set executed by the associated computing device.

## Description

The present invention relates to computing systems and reflective memory networks.

Reflective memory is a known concept that provides a network where large amounts of data can be transferred between computing devices with low latency and high degree of determinism. It uses fibre optic cable to link computing devices that are fitted with reflective memory I/O cards. In order to use reflective memory effectively, it should be ensured that each parameter processed by an application set being executed on the computing devices has a unique address and is not overwritten at any point during data transfer by writing to that same address.

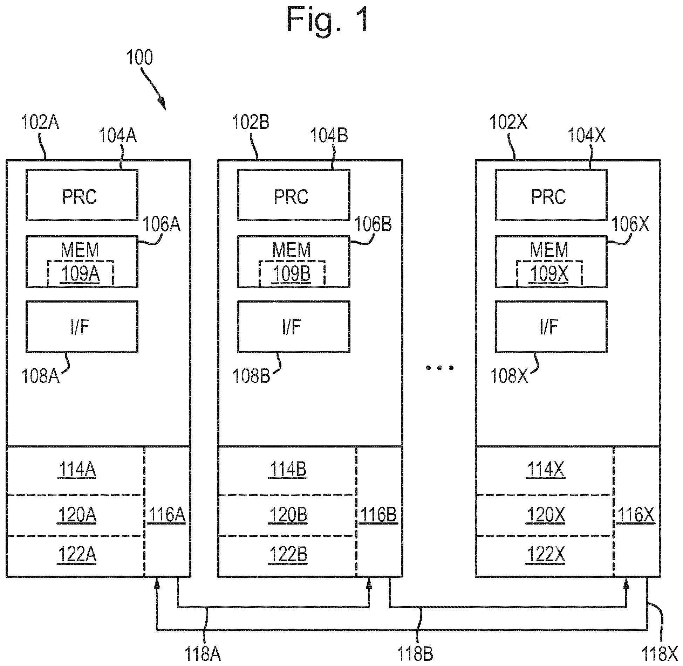

For example, referring to Figure 1, if a first computing device 102A in a computing system 100 configured to operate a reflective memory network writes a temperature value of "50" to a reflective memory address x3E8 (addresses are typically in hexadecimal format) and a second computing device 102B in the system writes a pressure value of "100" to the same address, then a third computing device 102X would read the value at address x3E8 as "100". However, without further information, it is unclear whether the value stored at this address represents a temperature value or a pressure value. It is therefore imperative to ensure addresses are not overwritten. In order to do this, users conventionally create a memory map.

Data in the reflective memory network is written to and read from predefined addresses. As such, it can be helpful to create a memory map describing where all the different data is located in the reflective memory to avoid conflicts, and to aid with configuring applications or models. Only data that is required to be written to the network may need to be considered, as any computing device in the system can access that written data. Often, a spreadsheet program, such as Microsoft Excel™, is used to create the memory map as it can make it easy to read.

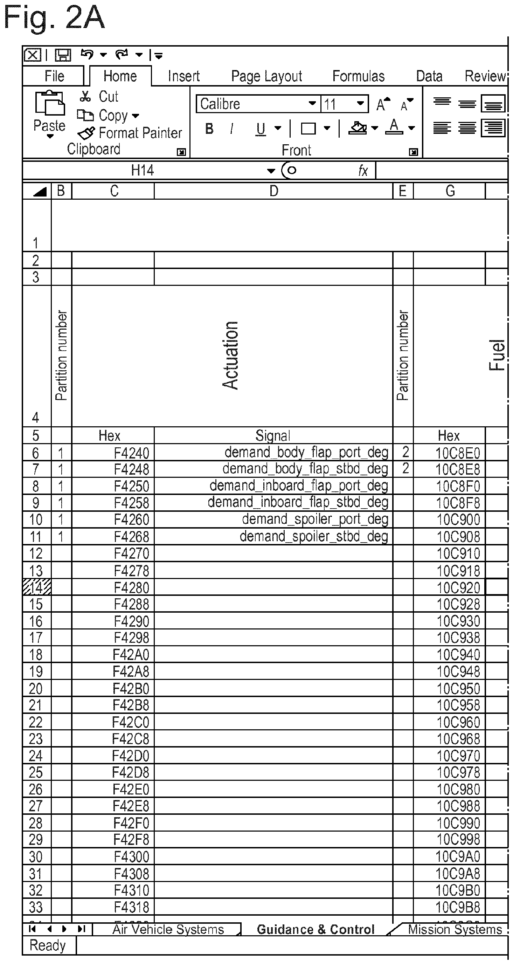

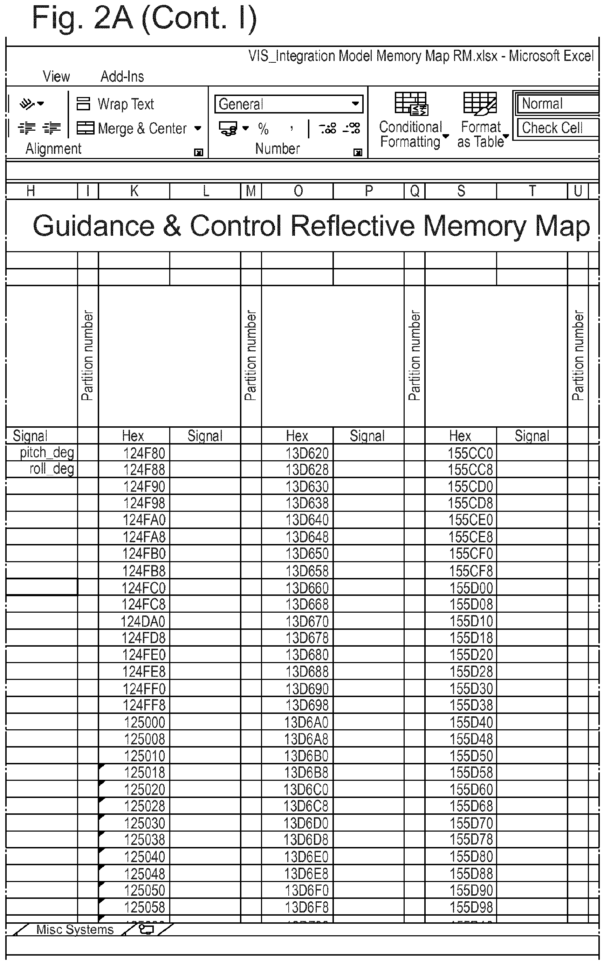

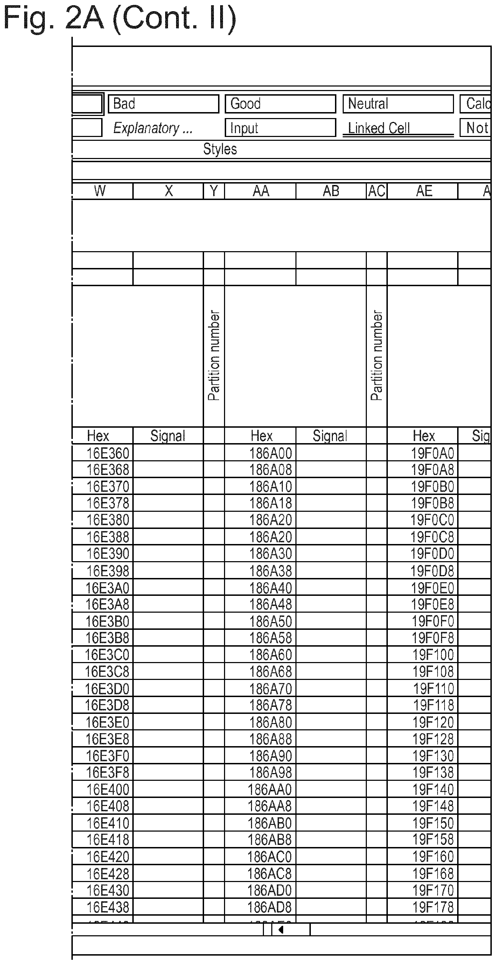

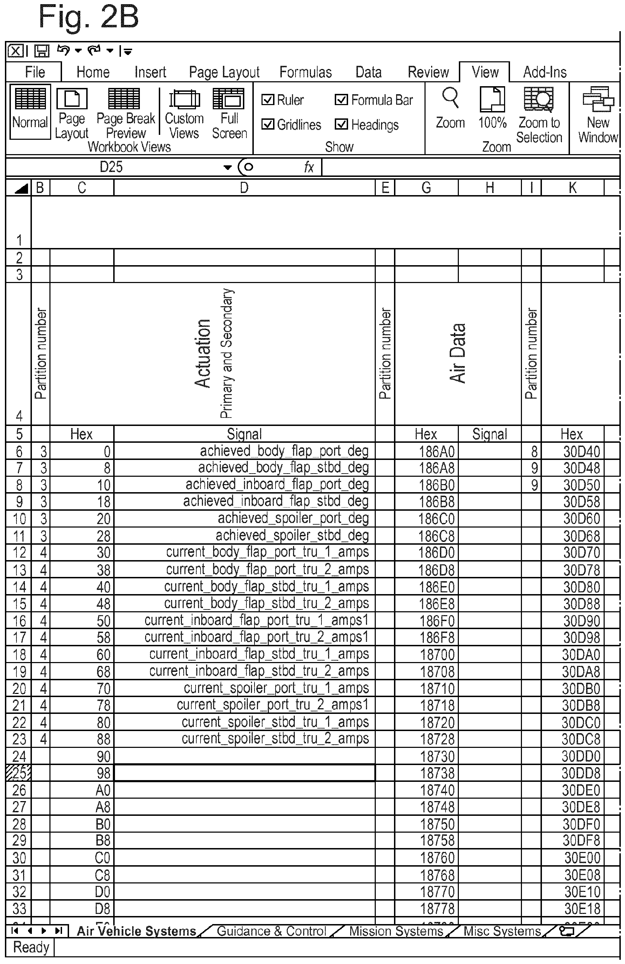

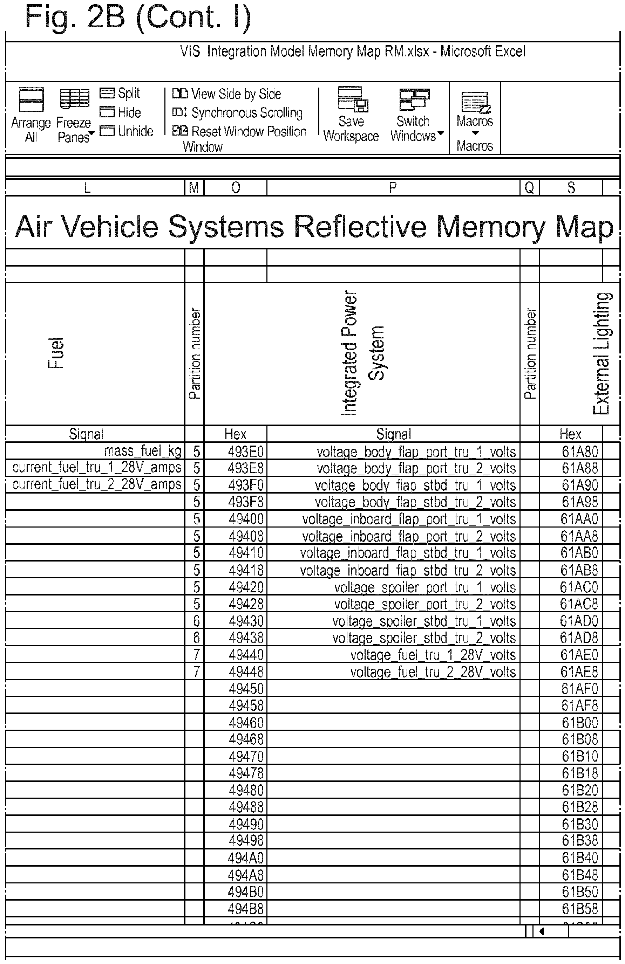

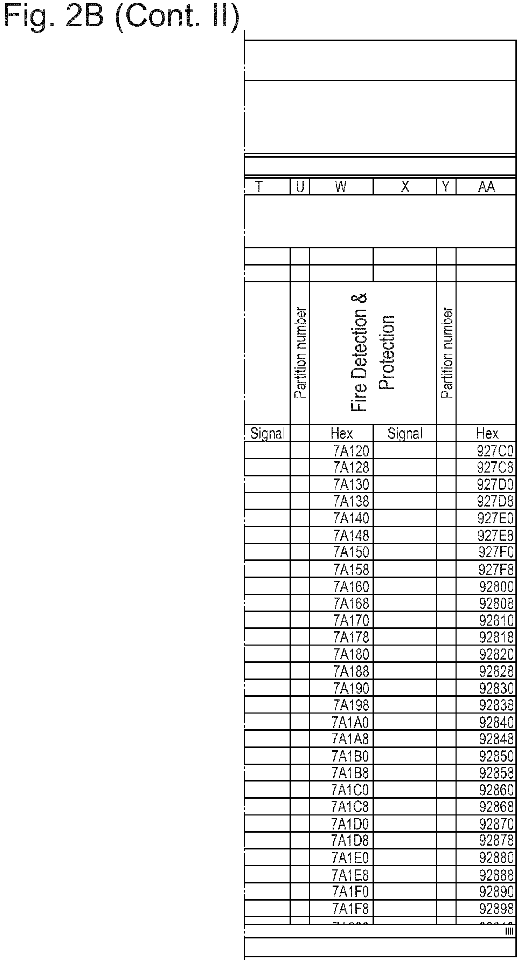

Examples of such spreadsheets representing examples of conventional memory maps are shown in Figures 2A and 2B. Each memory map can break up the millions of available addresses into a readable format. In the case where the reflective memory is used by an application set that models a real-word system (e.g. an aircraft), each sheet can be a different discipline of the system being modelled. Each discipline is then broken down into its individual sub-system(s). Each parameter is then typed into a cell next to an address on the sheet, and they are grouped together and given a partition number. These partitions can match the groups of parameters within the real-time model. Partitions will be determined by the architecture of the system being simulated. For example, in an example system there are six actuators, and any other model (being simulated on a different real-time target) requiring these values would always want to understand the position values of all six actuators at any one time. Therefore, the actuators in this example are grouped into a partition. It is possible to assign a parameter to any address within the millions available within the reflective memory.

Thus, although the memory map is used as a reference/guide by users/programmers, following it when setting up parameters in an application set effectively configures the usage of addresses of the reflective memory so that a particular memory location in the reflective memory stores data corresponding to a particular parameter as defined by the memory map. In order to correctly use the reflective memory, the computing devices 102 in the system 100 can be provided with information indicating the addresses in the reflective memory where the parameters are intended to be stored. In some cases, e.g. when using a target computer produced by the manufacturer Speedgoat™ GmbH, this can be done by writing a script for the application set/models. The script may be included as code for part of the application set to be executed by a computing device, or may be separate and called from/referenced by that application part. Below is an extract of an example script containing only elements required for this description:

```
       Partitions(1).Address = '0xF4240'; {This line defines the starting
       address of the partition}
       Partitions(1).Type = 'double'; {This line defines the data type -
       always double in some cases)
       Partitions(1).Size = '6'; {This line defines the number of
      parameters in the partition}
  
       Partitions(2).Address = '0x10C8E0';
       Partitions(2).Type = 'double';
       Partitions(2).Size = '2';
  
       Partitions(3).Address = '0x0';
       Partitions(3).Type = 'double';
       Partitions(3).Size = '6';
  
       Partitions(4).Address = '0x30';
       Partitions(4).Type = 'double';
       Partitions(4).Size = '12'; ...
```

Scripts can be completed for all the partitions in the application set/model. Conventionally, the order in which the partitions are written in does not have to be numerically sequential and, as shown above, the addresses used can be in any non-numerical order (e.g. '0x0' following '0x10C8E0').

The above methods normally operate satisfactorily when using computing devices (e.g. target computer machines) produced by the same manufacturer. However, the present inventor discovered that when different computing devices (e.g. a target computer produced by the manufacturer Speedgoat™ GmbH, and another target computer produced by National Instruments Corporation) were connected together to create a reflective memory network, using the above methods resulted in a corrupted reflective memory network. Despite vast amounts of time spent researching and talking to the individual manufacturers no available solution to the problem was found.

Embodiments of the present invention are intended to address at least some of the above technical problems.

Embodiments can solve the problem based on configuring the reflective memory in a particular manner, which can be done by following specific rules, which can define a particular style of memory map and, in some cases, corresponding scripts. Embodiments may also involve the creation of "ghost partitions" in order to ensure that future changes can be accommodated.

According to one aspect of the present invention there is provided a computing system comprising:
a plurality of computing devices configured to collectively operate a reflective memory network,
wherein each of the computing devices is configured to execute a respective part of an application set that processes a plurality of parameters, and
wherein each of the computing devices includes a respective local reflective memory that stores at least one parameter written by the part of the application set executed by that computing device, and copies of others of the parameters written by others of the plurality of computing devices to their respective local memories and updated by the reflective memory,
wherein the reflective memory network is configured as:
   a series of sets of contiguous addresses, each of the sets associated with a respective one of the plurality of computing devices and including a predefined number of the contiguous addresses useable only for storing the at least one parameter written by the part of the application set executed by the associated computing device.

A last said address in one of the series of sets will be directly contiguous with a first address in a subsequent one of the series of sets.

A first of the addresses in a first of the series of sets will normally be numerically higher than a first available address of the reflective memory, e.g. at least 256, and in some cases 1000, addresses higher than the first available address of the reflective memory. This can avoid a clash with register reserves used by manufacturers.

Each of the sets associated with a respective one of the plurality of computing devices can represent at least one partition containing the parameters that are written by the part of the application set executed by that computing device. In some cases, at least one of the partitions (which may be called a "ghost partition") may comprise addresses that are reserved for future use by the part of the application set executed by that computing device.

Information regarding (e.g. definitions of) the series of sets may be included in code, e.g. scripts, included in, or accessible by, each of the parts of the application set executed by each of the computing devices. The definitions of the sets in the code will normally be ordered in a same order as the sets are arranged in the reflective memory.
at least one of the plurality of computing devices may be different in terms of (hardware and/or software) configuration, version, model and/or manufacturer to at least one other of the computing devices.
Application set/model = test model of a (physical, electrical and mechanical (dynamic)) system; computing devices = target computers
each of the computing devices can include a reflective memory network component

According to another aspect of the present invention there is provided a (computer-implemented) method of configuring a computing system comprising a plurality of computing devices configured to collectively operate a reflective memory, the method comprising:
configuring each of the computing devices to execute a respective part of an application set that processes a plurality of parameters;
providing each of the computing devices with a respective local memory that stores at least one parameter written by the part of the application set executed by that computing device, and copies of others of the parameters written by others of the plurality of computing devices to their respective local memories and updated by the reflective memory, and
configuring the reflective memory as a series of sets of contiguous addresses, each of the sets associated with a respective one of the plurality of computing devices and including a predefined number of the contiguous addresses useable only for storing the at least one parameter written by the part of the application set executed by the associated computing device.

The method may comprise generating a map of the reflective memory, e.g. represented by a spreadsheet, useable to assist with the step of configuring the reflective memory. The reflective memory map may comprise a plurality of groups of information locations (e.g. cells), each of the groups corresponding to one of the sets of contiguous addresses and containing information regarding the addresses and the parameters of the set. The groups of information may be arranged in columns and rows. Each of the columns may be associated with (only) one of the plurality of computing devices.

The method may further include providing a script as part of, or associated with, the respective part of the application set executed by a particular one of the plurality of computing devices, the script including a definition of at least one of the sets that stores the at least one parameter written by the part of the application set. The script may include at least a start address of the set, and an end address, or length/size, of the set.

According to another aspect there is provided a computer program product (e.g. parts of an application set) comprising instructions which, when the program is executed by a computer, cause the computer to carry out methods substantially as described herein.

According to other aspects of the present invention there is provided a computer device configured to execute a method substantially as described herein.

According to another aspect of the present invention there is provided a reflective memory network (which can comprise a plurality of reflective memory components) configured substantially as described herein.

According to yet another aspect there is provided a system at least partially designed and/or produced using a method substantially as described herein. The system may, for example, comprise at least part of a vehicle.

### BRIEF DESCRIPTION OF THE FIGURES

For a better understanding of the invention, and to show how embodiments of the same may be carried into effect, reference will now be made, by way of example, to the accompanying diagrammatic drawings in which:
Figure 1 is a block diagram of an example computing system comprising computing devices configured to collectively operate a reflective memory;
Figures 2A and 2B are examples of spreadsheets used to represent conventional reflective memory maps;
Figure 3 schematically illustrates part of an example system model that can be executed by the computing system, and
Figure 4 is an example spreadsheet used to represent a reflective memory map in accordance with an embodiment.

### DETAILED DESCRIPTION OF THE FIGURES

Figure 1 is a block diagram of an example computing system 100 comprising a plurality of computing devices 102A, 102B, ... , 102X that collectively operate a reflective memory system. It will be understood that the illustrated number, arrangement and types of computing devices are exemplary only, and "X" can be any practical number greater than one.

In general, each computing device 102 can be substantially conventional and will include (or be associated with) at least one processor 104 and internal memory 106 (e.g. Random Access Memory), and can also have an interface module 108 that allows communication with other devices, e.g. via any suitable wired/wireless interface and/or communications network. The internal memory 106 can store data and instructions for processing by the processor 104. Each computing device may also include (or be associated with) further conventional features, such as non-volatile storage device(s), a user interface, and so on, which need not be described herein in detail.

In general, at least one of the computing devices 102 will differ in at least one respect from at least one of the other computer devices in the system 100 in a manner that results in the reflective memory network configured in the conventional manner described above not operating properly. The difference will typically comprise the computing devices being made by different manufacturers, but may, alternatively or additionally, be in terms of hardware, operating system and/or software configuration, or version or model.

In some cases, some or all of the computing devices 102 may comprise a target computer/machine. A target computer can comprise hardware that is specially designed/optimized for performing certain tasks/applications, such as physical dynamic system modelling, and can be made for hard real-time execution, where reaction times are fully deterministic. Examples of suitable target computers comprise the Performance real-time target machine produced by Speedgoat GmbH of Liebefeld, Switzerland (which can provide multicore, multi-target, and FPGA-based hardware and may be specifically configured to execute software technologies provided by MathWorks™ and Speedgoat™ so that closed-loop sample rates up to several MHz are achievable), and the dedicated Real-Time Target (which can convert a standard PC into a dedicated Real-Time deployment platform) produced by National Instruments Corporation (U.K.) Ltd, of Berkshire, UK. However, it will be understood that in alternative embodiments the computing devices may not comprise target computers.

Each of the computing devices 102 may be configured to execute parts of an application set. In some embodiments the application set simulates a real-time test model of a physical, electrical or mechanical (dynamic) system (for example, an aircraft) and may be implemented using a modelling environment, such as Simulink™ (that can use Simscape™ elements) produced by Mathworks™ of Natick, MA, USA. However, it will be understood that alternative embodiments can execute different types of application sets (e.g. Electrical Power, Fuel, Thermal, Flight Control, Actuation, Propulsion, Utility Management, Weapons integration, or any software control or hardware plant models in any industry in general), and/or can be implemented using different programming environments, (e.g. AMESim™ (produced by LMS Imagine.Lab/Siemens PLM Software of Piano, Texas, USA); FLOmaster™, LabVIEW (produced by National Instruments), and the like).

The application set may be written/coded so that different parts of it can be executed by different ones of the computing devices 102. This is illustrated schematically in Figure 1, where the internal memory 106A, 106B, ... , 106X of each of the computing devices 102A, 102B, ... , 102X stores a respective part 109A, 109B, ... , 109X of an example application set. The way in which an application set is divided into parts will typically be determined by a programmer, e.g. the different parts may comprise separate code modules, executable files and related data, and so on.

Thus, "application set" should be interpreted broadly and can comprise any set of programs that can be executed simultaneously, or in series, on a plurality of computing devices that are in communication with each other and which are capable of processing shared parameters/data/variables over a reflective memory network. A programmer/user can also decide which computing device is to be deployed with/execute a particular part of the application set. In embodiments where the application set models a physical system, different parts of the application set may model one or more subsystems of the physical system. For instance, one part of the application set may model an actuation sub-system of an aircraft being modelled, and another part of the application set can model a battery sub-system of the aircraft, and so on.

The application set executed by the computing devices 102 can process a plurality of parameters. For instance, in embodiments where the application set models an aircraft, the parameters may represent values such as the present voltage of a battery in a sub-system of the aircraft, and so on.

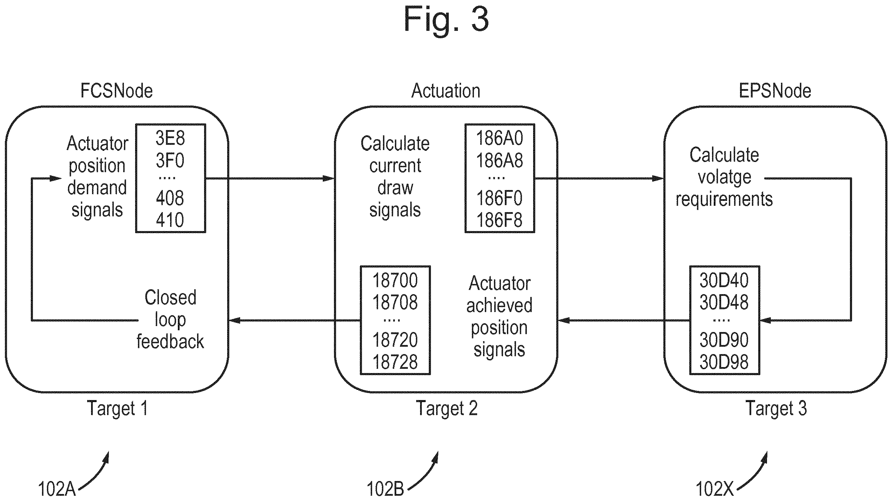

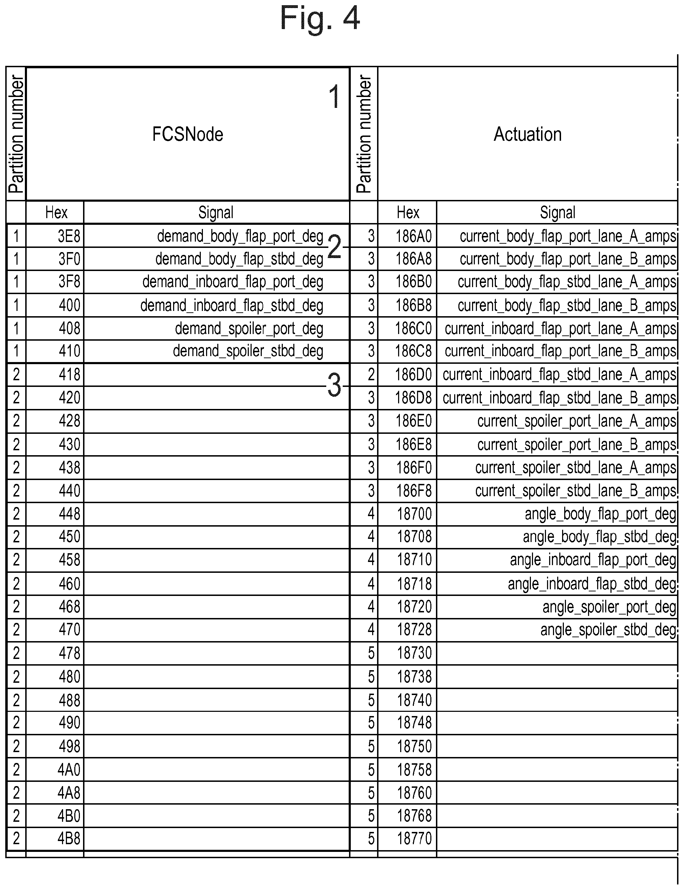

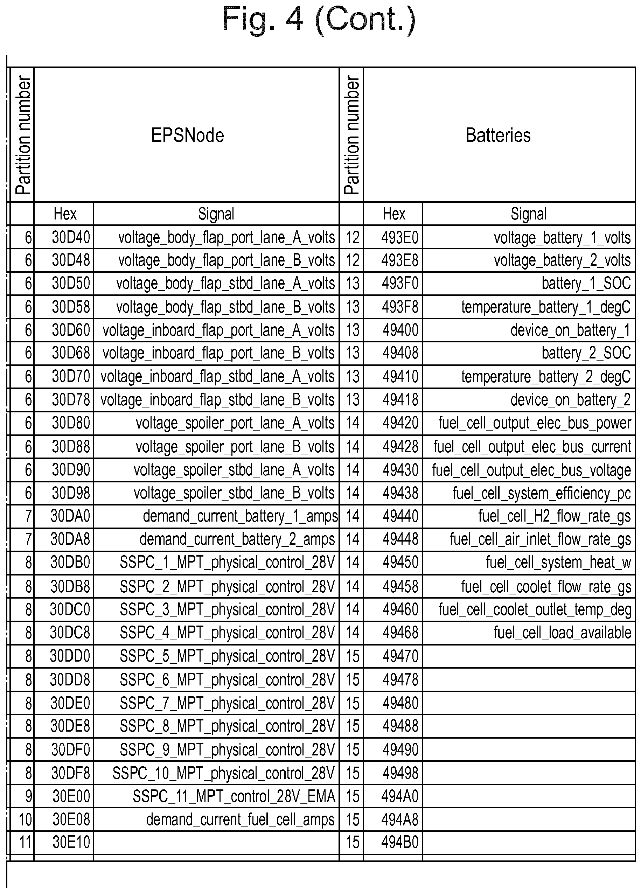

Figure 3 schematically illustrates an extract of a system model that can be executed by the computing devices 102. It uses a sample of the same parameters also present in the example memory map shown in Figure 4 and described below.

The parameters can be made accessible to the computing devices 102 by means of a shared memory set provided by the reflective memory network. Each part 109 of the application set may read any/all of the parameters, but can only write (i.e. update/modify a value of) a subset comprising one or more of the parameters. Subsets of the parameters can be grouped with the application part/model and be given a partition number.

Each of the computing devices 102A, 102B, ..., 102X in the example system 100 further includes a respective reflective memory component 110A, 110B, ... , 110X that allows them to collectively operate the reflective memory network. A non-limiting example of a suitable component comprises a Reflective Memory node card, such as PCI-5565PIORC, produced by Abaco Systems Inc, of Huntsville, AL, USA. The reflective memory network can provide an independent copy of an entire shared memory set in each computing device in the system 100. Each computing device can access and change this set of local data at the full speed of local memory.

Each reflective memory component 110 has its own local memory 114 as well as an interface and logic 116 that allows both the local computing device 102 and other computing devices in the reflective memory network to access this local memory. When a computing device writes data to the local copy of reflective memory, the data is transmitted/copied to the other computing devices in the system using fibre optic links 118A, 118B, ... , 118X that connect the reflective memory components of the computing devices in the system. Different configurations can be used to achieve this connection, e.g. a ring or star topology.

Thus, each computing device 102 in the system 100 always has an up-to-date local copy of the entire shared memory set made available by the reflective memory. Write operations are typically first performed by a computing device to its local reflective memory 114 and the write operate is then automatically broadcast to all other computing devices in the reflective memory network. Read operations access the local copy of the data, which always mirrors other local copies on the reflective memory network.

The local reflective memory 114 of each of the reflective memory components 110 can therefore provide access to the parameters processed by the application set. In Figure 1, the local memory 114A of the first computing device 102A is shown schematically as storing a first subset 120A of the parameters. This first subset comprises the parameters that are written by the part 109A of the application set that is executed by the first computing device 102A. The first subset may comprise one or more partition/group of the parameters that can be written by the application set part 109A, which can be determined by a programmer as discussed above.

The local reflective memory 114A of the first computing device 102A is also shown schematically as storing a second subset 122A of parameters. This second subset comprises the parameters of the application set that are not written by the application set part 109A, but which may be read by it (and which can be written by another part of the application set that is executed by another one of the computing devices in the system 100). As explained above, the reflective memory network allows the first computing device 102 to store an up-to-date local copy of the entire shared memory set containing all the parameters that can be processed by the application set.

Similarly, the local reflective memory 114B of the second computing device 102B in the system 100 includes a first subset 120B of the parameters (that are written by the part 109B of the application set) and a second subset 122B of the parameters (that are not written by the application set part 109B, but which may be read by it, and which can be written by another part of the application set that is executed by another one of the computing devices in the system). This also applies to the other computing devices, including the computing device 102X, whose local reflective memory 114X stores a first subset 120X and a second subset 122X of the parameters in a similar manner.

Thus, each of the computing devices 102 includes a respective local memory that stores at least one parameter that is writeable by the part of the application set executed by that computing device (and which is/are also updated by the reflective memory network), as well as copies of others of the parameters that are written by others of the plurality of computing devices to their respective local memories (and also updated by the reflective memory network).

The local reflective memories 114 of the computing devices 102 can all be configured to collectively provide a reflective memory according to an embodiment of the invention disclosed herein. The reflective memory can be configured as a series of sets of contiguous addresses, each of the sets associated with (exclusively/dedicated to) the parameters that are writeable by the part of the application set being executed by a respective one of the plurality of computing devices. Each of the sets can include a predefined (identical/same/fixed) number of the contiguous reflective memory addresses that are intended to be useable only for storing the parameter(s) written by that part of the application set that is executed by the associated computing device.

In order to configure the reflective memory in this manner, a programmer/user may construct a memory map. In some embodiments the memory map may be constructed using a template based on the example/guidelines given herein. The memory map can also act as the basis for scripts, when required.

Figure 4 shows an example of a memory map according to an embodiment. The example memory map is in the form of a spreadsheet; however, although a spreadsheet is convenient, it will be appreciated that its use is not essential to configuring a reflective memory according to embodiments. Also, a programmer/user may use a different form of memory map to be used as a guide/aid for configuring the reflective memory in relation to the parameters of a particular application set, and the memory map does need not follow a row/column format.

The present inventor found that in order to have a reflective memory network transfer data correctly across all computing devices, when at least one of them is different from the other(s), the following guidelines should preferably be followed:
- The memory map should not contain any empty gaps between partitions (although partitions can be empty). For instance, with reference to the example of Figure 4, the first address (418) in partition 2 directly numerically follows the last address (410) in partition 1; the first address (18700) in partition 4 directly numerically follows the last address (186F8) in partition 3, and so on. However, it is possible to include "ghost partitions"
- The addresses that store parameters in each partition should also run sequentially in the memory map. For instance, with reference to the example of Figure 4, the addresses in partition 1 start with 3E8, followed by 3F0, 3F8, 400, and so on.
- The corresponding script, if used, must have each partition listed sequentially. For instance, with reference to the example script below, "Partitions(1)" is first defined, followed by "Partitions(2)", followed by "Partitions(3)", and so on, up to the final partition of the application set.
- The start address of the memory map should not be zero because an initial portion of the reflective memory can be used by some manufacturers as a configuration register

Therefore, new versions of the memory map (and scripts, where needed) can be generated to reflect these findings.

As can be seen in Figure 4, the conventional idea of having different disciplines on each sheet, and those sheets being broken down into subsystems is not followed. In contrast, embodiments of the solution involve having each column of the spreadsheet map contain only the parameters that are processed by (the part 109 of the application set executed by) a particular computing device 102. Therefore, the part (e.g. models) of the application set that is deployed and run on a specific computing device determines which parameters are intended to use the reflective memory addresses included within a particular column of the map, regardless of the system discipline or sub-system.

As shown in Figure 4, each of the column headings (1) is associated with one of the computing devices 102, e.g. the "FCSNode" column can be associated with a Speedgoat™ target computer 102A, the "Actuation" column can be associated with another Speedgoat™ target computer 102B, the "EPSNode" column can be associated with National Instruments target computer 102X, and so on.

The length of each column (12,500 addresses in the illustrated example) in the spreadsheet will remain the same. This can accommodate future expansion of the parameters that may be used in relation to the application set/modelled system. 12,500 was used in the example because this means in decimal terms that each column started at the next 100,000. However, this was done for ease of reading, and any number could be used in alternative embodiments.

As shown at the reference numeral (2), partition 1 starts at address 3E8, which is 1000 in decimal. Thus, the start address of the memory map is numerically higher than zero to allow for usage of initial addresses for the purpose of a configuration register, as done by some manufacturers. Although existing configuration registers typically only use up to 256 bytes, the example went to 1000 in order to accommodate possible future changes/expansion.

The memory map can also ensure that there are no "gaps" within the partition groups in the reflective memory. However, it is still possible to reserve addresses for future expansion if required, by creating "ghost partitions" that contain no specific parameter(s), but could be used for that purpose in future. An example is shown at reference numeral (3). It is also possible to have ghost partitions in between others; for example, partition 4 could be a ghost partition, and then partition 5 could be used for the angle parameters currently in partition 4 of the example. This can enable easier expansion for each group of parameters, rather than just the sum of parameters of each computing device/target machine.

Thus, all of the reflective memory locations in each column (i.e., a fixed number of consecutive reflective memory locations) are assigned for storing a particular parameter that is writable by the associated computing device (or at least is reserved for a future parameter that will be writable by the associated computing device) in an unbroken numerical sequence. Further, the first address in a subsequent column also directly follows the final address of the previous column in an unbroken numerical sequence. Thus, the memory map, from its first row/column to its final row/column, sequentially defines how an uninterrupted block of addresses in the reflective memory should be used for storing parameters of the application set.

An extract of a script that corresponds to the illustrated example of Figure 4 is shown below:

```
     Partitions(1).Address = '0x3E8'; {The new starting address of the
 map (i.e. not zero)}
     Partitions(1).Type = 'double';
     Partitions(1).Size = '6';
     Partitions(2).Address = '0x418'; {The start address of the ghost
     partition}
     Partitions(2).Type = 'double';
     Partitions(2).Size = '12369'; {The number of addresses in
 the ghost partition until the start of the next column}
     Partitions(3).Address = '0x186A0'; {The equivalent of decimal
 100,000}
     Partitions(3).Type = 'double';
     Partitions(3).Size = '12';
     Partitions(4).Address = '0x18700';
     Partitions(4).Type = 'double';
     Partitions(4).Size = '6'; {Again, this can be continued
 until all partitions are defined}
 ...
```

It will be understood that the form and content of the memory map and scripts are exemplary only and variations are possible. For example, instead of defining the starting address and size of a partition, the definition could indicate its starting address and its last address. Further, in cases where scripts are not used, e.g. when not using a Speedgoat™ target computer, then the memory map/reflective memory can still be structured in accordance with the principles described herein.

Thus, in use, a reflective memory having its addresses configured as described herein (e.g. according to a memory map following the above guidelines, or at least when used by an application set that has its parameters assigned to reflective memory addresses in a manner that follows the guidelines) will reduce/eliminate the risk of a corrupt reflective memory. Following the above methods of creating the map and scripts will work for both single manufacturer systems as well as multiple manufacturer systems. Having the ability to combine different manufacturers' machines opens up expansion possibilities, especially for hardware in-the-loop testing, as well as giving the ability to share data/models between functions, thereby significantly reducing costs during development and testing phases.

Embodiments of the components described herein can be implemented using any suitable software applications, programming language, data editors, etc, and may be represented/stored/processed using any suitable data structures, and so on.

Attention is directed to any papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A computing system (100) comprising:
a plurality of computing devices (102) configured to collectively operate a reflective memory network,
wherein each of the computing devices is configured to execute a respective part (109) of an application set that processes a plurality of parameters, and
wherein each of the computing devices includes a respective local reflective memory (114) that stores at least one parameter written by the part of the application set executed by that computing device, and copies of others of the parameters written by others of the plurality of computing devices to their respective local memories and updated by the reflective memory,
wherein the reflective memory network is configured as:
a series of sets of contiguous addresses, each of the sets associated with a respective one of the plurality of computing devices and including a predefined number of the contiguous addresses useable only for storing the at least one parameter written by the part of the application set executed by the associated computing device.

2. A computing system according to claim 1, wherein a last said address in one of the series of sets is directly numerically contiguous with a first address in a subsequent one of the series of sets.

3. A computing system according to claim 1, wherein a first of the addresses in a first of the series of sets is numerically higher than a first available address of the reflective memory.

4. A computing system according to claim 3, wherein the first available address of the reflective memory is numbered zero and the first of the addresses in the first of the series of set is at least 256.

5. A computing system according to claim 1, wherein each of the sets associated with a respective one of the plurality of computing devices (102) represents at least one partition containing the parameters that are written by the part (109) of the application set executed by that computing device.

6. A computing system according to claim 5, wherein at least one of the partitions comprises addresses that are reserved for future use by the part (109) of the application set executed by that computing device (102).

7. A computing system according to claim 1, wherein definitions of the series of sets is included in code/script included in, or accessible by, each of the parts (109) of the application set executed by each of the computing devices (102).

8. A computing system according to claim 7, wherein the definitions of the sets in the code/script are ordered in a same order as the series of sets are arranged in the reflective memory.

9. A computing system according to claim 1, wherein at least one of the plurality of computing devices (102A) is different in terms of manufacturer to at least one other of the computing devices (102X).

10. A computing system according to claim 1, wherein the application set is configured to provide a test model of a physical, electrical or mechanical system.

11. A computing system according to claim 10, wherein at least one of the plurality of computing devices comprises a target computer.

12. A computer-implemented method of configuring a computing system comprising a plurality of computing devices configured to collectively operate a reflective memory, the method comprising:
configuring each of the computing devices to execute a respective part of an application set that processes a plurality of parameters;
providing each of the computing devices with a respective local memory that stores at least one parameter written by the part of the application set executed by that computing device, and copies of others of the parameters written by others of the plurality of computing devices to their respective local memories and updated by the reflective memory, and
configuring the reflective memory as a series of sets of contiguous addresses, each of the sets associated with a respective one of the plurality of computing devices and including a predefined number of the contiguous addresses useable only for storing the at least one parameter written by the part of the application set executed by the associated computing device.

13. A method according to claim 12, further comprising generating a map of the reflective memory, wherein the reflective memory map comprises a plurality of groups of information locations, each of the groups corresponding to one of the sets of contiguous addresses and containing information regarding the addresses and the parameters of that set.

14. A method according to claim 12, further comprising providing a script/code as part of, or associated with, the parts of the application set executed by the plurality of computing devices, the script/code including definitions of series of sets.

15. A product comprising instructions which, when the program is executed by a computer operating a reflective memory network, causes the computer to carry out a method according to claim 12.
